# EUROPÄISCHE PATENTANMELDUNG

(11) **EP 1 104 773 A1**
(43) Veröffentlichungstag der Anmeldung: **06.06.2001**
(21) Anmeldenummer: 00125283.2
(22) Anmeldetag: 21.11.2000
(51) Int. Cl.: C08F 8/00

(54) **Verfahren zur Herstellung monodisperser Adsorberharze und deren Verwendung**

(30) Priorität: 03.12.1999 DE 19958390
(71) Anmelder: BAYER AG, 51368 Leverkusen (DE)
(72) Erfinder: Schnegg, Ulrich, Dr., 51377 Leverkusen (DE); Martin, Georg, Dr., 40764 Langenfeld (DE); Feistel, Lothar, 04509 Delitzsch (DE); Strüver, Werner, Dr., 51375 Leverkusen (DE); Holzbrecher, Michael, 51766 Engelskirchen (DE)

(57) **Zusammenfassung**

Gegenstand der vorliegenden Erfindung ist ein Verfahren zur Herstellung monodisperser, gelförmiger Adsorberharze durch Polymerisieren von Monomertröpfchen zu monodispersen Polymerisaten, Haloalkylierung und schließlich Vernetzen der Polymerisate sowie deren Verwendungen.

## Beschreibung

Gegenstand der vorliegenden Erfindung ist ein Verfahren zur Herstellung monodisperser, gelförmiger Adsorberharze durch Polymerisieren von Monomertröpfchen zu monodispersen Polymerisaten, Haloalkylierung und schließlich Vernetzen der Polymerisate sowie deren Verwendungen.

Polymeradsorber sind Adsorbentien mit guten adsorptiven und anwendungstechnischen Eigenschaften. In zahlreichen Fällen sind sie denen auf Kohle- und anorganischer Basis deutlich überlegen. Ihre Verwendung finden derartige Polymeradsorber in der Adsorption gasförmiger, flüssiger organischer Substanzen oder gelöster organischer Stoffe. Der Adsorption organischer Stoffe kommt hierbei eine besondere Bedeutung zu, wobei der Schwerpunkt vor allem in der Behandlung von Abwässern zu suchen ist.

Die Trenneigenschaften der Adsorberharze lassen sich auch in chromatographischen Trennverfahren ausnutzen.

Allgemein wird die Herstellung von Polymeradsorbern beispielsweise in US-A 5 416 124 oder DD-A 249 703 durch Umsetzung entsprechender Polymere mit einem Haloalkylierungsreagens, wie z.B. Monochlordimethylether oder a,a'-Dichlorxylol beschrieben. In einem weiteren Syntheseschritt werden anschließend die eingeführten Halogenalkylgruppen mittels eines Friedel-Crafts-Katalysator in einem inerten Quellmittel unter Halogenwasserstoff-Freisetzung mit der Polymerstruktur vernetzt. Nach Entfernung des Quellmittels werden die Adsorberharze gewaschen.

In DD-A 249 703 aber auch in US-A 5 460 725 bzw. US-A 5 416 124 werden Adsorber nach der oben beschriebenen Weise dadurch erhalten, dass man das Copolymere mit Monochlordimethylether zunächst chlormetyliert und im Anschluss nachvernetzt.

Im Falle von DD-A 249 703 setzt man Copolymere mit einem Divinylbenzol-Anteil von 3 bis 8 Gew.-% ein. Der Chlorgehalt nach der Chlormethylierung soll zwischen 11.5 bis 17.8 Gew.-% liegen, was in etwa einem Substitutionsgrad von 40 bis 70 % entspricht. Die Nachvernetzung des trockenen, lösungsmittelfreien (max. 5 % Methanol), Chlormethylgruppen enthaltenden Polymers erfolgt durch die Umsetzung in einem Quellmittel wie Dichlorethan oder Tetrachlorethan mit einem Friedel-Crafts-Katalysator wie FeCl₃, SnCl₄ oder A1Cl₃ bei Temperaturen über 75°C.

Die in der US-A 5 416 124 zum Einsatz kommenden makroporösen Polymere sind beispielsweise Styrol/Divinylbenzol-Copolymere, die unter Zusatz eines Porogens wie beispielsweise C6-C8-Kohlenwasserstoffen hergestellt werden. Des weiteren kann auch anstelle von Styrol Ethyl-vinyl-benzol oder ein Gemisch aus beiden eingesetzt werden. Die Chlormethylierung soll einen Subsitutionsgrad von ca. 60 bis 70% liefern.

US-A 5 416 124 lehrt auch, dass makroporöse monodisperse Adsorber hergestellt werden können und in der Chromatographie besondere Vorteile bieten.

Weiter Synthesestrategien zur Herstellung solcher Adsorbentien gemäß US-A 4 191 813 basieren auf der nachträglichen Vernetzung von Vinylbenzylchlorid-Copolymeren in Gegenwart eines Quellmittels durch Friedel-Crafts-Katalysatoren oder auf der Nachvernetzung von Polymeren, die Alkylierungs-, Acylierungsmittel oder Schwefelhalogenide enthalten.

Die letztgenannten Herstellverfahren besitzen jedoch den Nachteil, dass bei der Synthese zum Teil zugängliche Edukte, wie das Vinylbenzylchlorid oder polyfunktionelle Alkylierungsmittel Verwendung finden, die bei unvollständigem Umsatz wieder aus dem Polymer entfernt werden müssen.

Der Nachteil der in US-A 5 416 124 und in US-A 5 460 725 beschriebenen Herstellung liegt darin, dass für die Herstellung des Copolymers ein Porogen notwendig ist, welches aus dem Herstellprozess ausgeschleust bzw. gegebenenfalls zurückgeführt werden muss.

Die Aufgabe der vorliegenden Erfindung bestand darin, ein möglichst einfaches Herstellverfahren für die oben beschriebenen Adsorbentien mit großer Oberfläche, verbesserter Stabilität, verbesserten Adsorptionseigenschaften sowie geringem Druckverlust beim Durchströmen eines flüssigen oder gasförmigen Mediums zu entwickeln. Dabei wäre es von Vorteil, wenn die Herstellung des Adsorberharzes in einen Herstellungsprozess für Anionenaustauscher einbezogen bzw. eines der üblichen Zwischenprodukte aus der Herstellung der Anionenaustauscher zum Adsorber weiterverarbeitet werden könnte.

Die Lösung der Aufgabe und damit der Gegenstand der vorliegenden Erfindung ist ein Verfahren zur Herstellung monodisperser, gelförmiger Adsorberharze, dadurch gekennzeichnet, dass man
a) Monomertröpfchen aus mindestens einer monovinylaromatischen Verbindung und mindestens einer polyvinylaromatischen Verbindung und/oder gegebenenfalls einem Initiator oder einer Initiatorkombination, zu einem monodispersen, vernetzten Perlpolymerisat umsetzt,
b) dieses monodisperse, vernetzte Perlpolymerisat mit Haloalkylierungsmitteln wie beispielsweise Monochloridmethylether haloalkyliert und
c) das haloalkylierte Perlpolymerisat in Gegenwart von Friedel-Crafts-Katalysatoren nachvernetzt.

Gemäß Verfahrensschritt a) wird mindestens eine monovinylaromatische Verbindung und mindestens eine polyvinylaromatische Verbindung eingesetzt. Es ist aber auch möglich, Gemische aus zwei oder mehreren monovinylaromatischen Verbindungen und zwei oder mehreren polyvinylaromatischen Verbindungen einzusetzen.

Überraschenderweise zeigen die gemäß vorliegender Erfindung hergestellten monodispersen, gelförmigen Adsorberharze eine höhere Ausbeute, hohe Kugelgüte, eine hohe osmotische Stabilität sowie eine höhere nutzbare Kapazität in der Anwendung, als die aus dem oben genannten Stand der Technik bekannten Adsorber. Des weiteren zeigen die erfindungsgemäß hergestellten Adsorber eine gute Adsorptions- und Desorptionskinetik.

Das monodisperse, vernetzte, vinylaromatische Grundpolymerisat gemäß Verfahrensschritt a) kann nach den aus der Literatur bekannten Verfahren hergestellt werden. Beispielsweise werden solche Verfahren in US-A 4 444 961, EP-A 0 046 535, US-A 4 419 245, WO-A 93/12167 beschrieben, deren Inhalte von der vorliegenden Anmeldung hinsichtlich des Verfahrensschrittes a) mitumfasst werden. Bevorzugt wird das monodisperse, vernetzte vinylaromatische Grundpolymerisat nach der seed/feed Methode (Saatzulaufinethode) gemäß EP-A 0 046 535 oder EP-A 0 051 210 hergestellt.

Als Copolymer im Sinne der vorliegenden Erfindung kommt in Verfahrensschritt a) beispielsweise ein Copolymer mit einer monovinylaromatischen Verbindung und einer polyvinylaromatischen Verbindung in Frage.

Als monovinylaromatische Verbindungen im Sinne der vorliegenden Erfindung werden in Verfahrensschritt a) bevorzugt monoethylenisch ungesättigte Verbindungen wie beispielsweise Styrol, Vinyltoluol, Ethylstyrol, α-Methylstyrol, Chlorstyrol, Chlormethylstyrol, Acrylsäurealkylester oder Methacrylsäurealkylester eingesetzt.

Besonders bevorzugte monoethylenisch ungesättigte Verbindungen im Sinne der vorliegenden Erfindung sind Styrol oder Mischungen aus Styrol mit den vorgenannten Monomeren.

Bevorzugte polyvinylaromatische Verbindungen im Sinne der vorliegenden Erfindung sind für Verfahrensschritt a) multifunktionelle ethylenisch ungesättigte Verbindungen wie beispielsweise Divinylbenzol, Divinyltoluol, Trivinylbenzol, Divinylnaphthalin, Trivinylnaphthalin, 1,7-Octadien, 1,5-Hexadien, Ethylenglycoldimethacrylat, Trimethylolpropantrimethacrylat oder Allylmethacrylat.

Die polyvinylaromatischen Verbindungen werden im allgemeinen in Mengen von 1 bis 20 Gew.-%, besonders bevorzugt 2 bis 8 Gew.-%, bezogen auf das Monomer oder dessen Mischung mit weiteren Monomeren eingesetzt. Die Art der polyvinylaromatischen Verbindungen (Vernetzer) wird im Hinblick auf die spätere Verwendung des kugelförmigen Polymerisats ausgewählt. Divinylbenzol ist in vielen Fällen geeignet. Für die meisten Anwendungen sind kommerzielle Divinylbenzolqualitäten, die neben den Isomeren des Divinylbenzols auch Ethylvinylbenzol enthalten, ausreichend.

In einer bevorzugten Ausführungsform der vorliegenden Erfindung kommen in Verfahrensschritt a) mikroverkapselte Monomertröpfchen zum Einsatz.

Für die Mikroverkapselung der Monomertröpfchen kommen die für den Einsatz als Komplexkoazervate bekannten Materialien in Frage, insbesondere Polyester, natürliche und synthetische Polyamide, Polyurethane oder Polyharnstoffe.

Als natürliches Polyamid ist beispielsweise Gelatine besonders gut geeignet. Diese kommt insbesondere als Koazervat und Komplexkoazervat zur Anwendung. Unter gelatinehaltigen Komplexkoazervaten im Sinne der Erfindung werden vor allem Kombinationen von Gelatine mit synthetischen Polyelektrolyten verstanden. Geeignete synthetische Polyelektrolyte sind Copolymerisate mit eingebauten Einheiten von beispielsweise Maleinsäure, Acrylsäure, Methacrylsäure, Acrylamid und Methacrylamid. Besonders bevorzugt werden Acrylsäure und Acrylamid eingesetzt. Gelatinehaltige Kapseln können mit üblichen Härtungsmitteln wie beispielsweise Formaldehyd oder Glutardialdehyd gehärtet werden. Die Verkapselung von Monomertröpfchen mit Gelatine, gelatinehaltigen Koazervaten und gelatinehaltigen Komplexkoazervaten wird in der EP-A-0 046 535 eingehend beschrieben. Die Methoden der Verkapselung mit synthetischen Polymeren sind bekannt. Gut geeignet ist beispielsweise die Phasengrenzflächenkondensation, bei der eine im Monomertröpfchen gelöste Reaktivkomponente, beispielsweise ein Isocyanat oder ein Säurechlorid, mit einer zweiten in der wässrigen Phase gelösten Reaktivkomponente, beispielsweise einem Amin, zur Reaktion gebracht wird.

Die gegebenenfalls mikroverkapselten Monomertröpfchen enthalten gegebenenfalls einen Initiator oder Mischungen von Initiatoren zur Auslösung der Polymerisation. Für das erfindungsgemäße Verfahren geeignete Initiatoren sind beispielsweise Peroxyverbindungen wie Dibenzoylperoxid, Dilaurylperoxid, Bis (p-chlorbenzoylperoxid), Dicyclohexylperoxydicarbonat, tert.-Butylperoctoat, tert.-Butylperoxy-2-ethylhexanoat, 2,5-Bis(2-ethylhexanoylperoxy)-2,5-dimethylhexan oder tert.-Amylperoxy-2-ethylhexan, sowie Azoverbindungen wie 2,2'-Azobis(isobutyronitril) oder 2,2'-Azobis(2-methylisobutyronitril).

Die Initiatoren werden im allgemeinen in Mengen von 0,05 bis 2,5 Gew.-%, vorzugsweise 0,1 bis 1,5 Gew.-% bezogen auf die Monomeren-Mischung, angewendet.

Die Begriffe mikroporös oder gelförmig bzw. makroporös sind in der Fachliteratur bereits eingehend beschrieben worden.

Bevorzugte Perlpolymerisate im Sinne der vorliegenden Erfindung, hergestellt durch Verfahrensschritt a), weisen eine gelförmige Struktur auf und werden nach Verfahren wie sie in der DE-A 19 852 667 beschrieben werden, hergestellt.

Die Umsetzung der Copolymerisate zum Adsorber erfolgt im Verfahrensabschnitt b) durch Haloalkylierung und anschließende Nachvernetzung der Haloalkylgruppen mit aromatischen Kernen des Polymergerüstes.

Zur Haloalkylierung werden üblicherweise geeignete Reagenzien, vorzugsweise Chlormethylmethylether eingesetzt. Diese Reagenzien, insbesondere des Chlormethylmethylether können in ungereinigter Form eingesetzt werden, wobei der Chlormethylmethylether als Nebenkomponenten beispielsweise Methylal und Methanol enthalten kann. Der Chlormethylmethylether wird im Überschuss eingesetzt und wirkt nicht nur als Reaktant sondern auch als Lösungs- und Quellmittel. Die Anwendung eines zusätzlichen Lösungsmittels ist daher im allgemeinen nicht erforderlich. Die Chlormethylierungsreaktion wird durch Zugabe einer Lewissäure katalysiert. Geeignete Katalysatoren im Sinne der Erfindung sind beispielsweise Eisen-(III)chlorid, Zinkchlorid, Zinn(IV)chlorid und Aluminiumchlorid. Die Reaktionstemperatur bei der Haloalkylierung kann im Bereich von 40 bis 80°C liegen. Bei druckloser Fahrweise ist ein Temperaturbereich von 50 bis 60°C besonders günstig. Während der Reaktion können die flüchtigen Bestandteile, wie Salzsäure, Methanol, Methylal, Formaldehyd, und teilweise Chlormethylmethylether durch Abdampfen entfernt werden. Für den Fall, dass mit Chlormethylmethylether haloalkyliert wird, kann zur Entfernung des Restes Chlormethylmethylethers sowie zur Reinigung des Chlormethylats mit Methylal, Methanol und schließlich mit Wasser gewaschen werden.

Im Verfahrensabschnitt c) wird das haloalkylierte Copolymerisat nach bekannten Verfahren, wie z.B. im DD-A 249 207 beschrieben, zum Adsorber umgesetzt.

Die Umsetzung kann gegebenenfalls im Haloalkylierungsmittel direkt durchgeführt werden, oder das haloalkylierte Copolymerisat vor dem Einsatz in den Verfahrensschritt c) im wesentlichen von überschüssigem Haloalkylierungsmittel befreit werden.

Dazu wird haloalkyliertes Polymerisat nach Verfahrensabschnitt b) gegebenenfalls getrocknet, in einem Quellmittel wie beispielsweise Halogenkohlenwasserstoffe oder Dichlorethan gequollen, ein Friedel-Crafts-Katalysator wie beispielsweise FeCl₃ (trocken oder gelöst), H₂SO₄ oder SnCl₄ zugegeben und bei erhöhter Temperatur, bevorzugt bei Siedetemperatur des Rührmediums, das mit dem Quellmittel identisch sein kann zur Reaktion gebracht. Erfahrungsgemäß lässt sich die Reaktion bei Temperaturen zwischen 50°C und 150°C sicher durchführen.

Die erfindungsgemäß hergestellten Adsorber werden eingesetzt zur Entfernung von polaren oder unpolaren, organischen oder anorganischen Verbindungen, beispielsweise Farbpartikeln oder Schwermetallen, aus wässrigen oder organischen Lösungen oder Gasen, insbesondere der chemischen Industrien, Elektroindustrien oder Lebensmittelindustrien. Die erfindungsgemäß hergestellten Adsorber werden bevorzugt eingesetzt
- zur Entfernung von polaren Verbindungen aus wässrigen oder organischen Lösungen
- zur Entfernung von polaren Verbindungen aus Prozessströmen der chemischen Industrie
- zur Entfernung von Farbpartikeln aus wässrigen oder organischen Lösungen,
- zur Adsorption von organischen Komponenten aus wässrigen Lösungen, aus Luft oder aus Gasen beispielsweise zur Adsorption von Aldehyden, Ketonen, aromatischen oder aliphatischen Kohlenwasserstoffen oder aromatischen oder aliphatischen Chlorkohlenwasserstoffen, insbesondere von Formaldehyd, Aceton oder Chlorbenzol
- zur Entfernung von Schwermetallen beispielsweise Arsen oder Selen aus wässrigen Lösungen

Weiterhin können die erfindungsgemäßen Adsorber zur Reinigung und Aufarbeitung von Wässern in der chemischen Industrie und Elektronikindustrie, sowie der Lebensmittelindustrie, insbesondere zur Herstellung von Reinstwasser, Reinstchemikalien und Stärke oder deren Hydrolyseprodukte eingesetzt werden.

Weiterhin können die erfindungsgemäßen Adsorber zur Reinigung von wässrigen Lösungen in den Abfallentsorgungs- oder Abfallverwertungsindustrien aber auch zur Reinigung von Abwasserströmen der chemischen Industrie sowie von Müllverbrennungsanlagen verwendet werden. Eine weitere Anwendung der erfindungsgemäßen Adsorber stellt die Reinigung von Sickerwässern aus Deponien dar.

Weiterhin können die erfindungsgemäßen Adsorber zur Aufbereitung von Trinkwasser oder Grundwässern eingesetzt werden.

Auch können die erfindungsgemäßen Adsorber zur Reinigung von Luft, beispielsweise in geschlossenen Räumen oder zur Gasreinigung eingesetzt werden.

Die Durchmesser der monodispersen Adsorber werden der Aufgabe entsprechend angepasst und wird bestimmt durch die Aufnahmeleistung einerseits und den Druckverlust andererseits. So haben sich in der Gas- und Luftreinigung große Kugeln besonders bewährt.

Die erfindungsgemäßen Adsorber zeigen gegenüber organischen Komponenten differenzierte Adsorptions- und Desorptionseigenschaften und können erfolgreich in Chromatographieanlagen zur Anreicherung und Trennung von organischen und/oder anorganischen Komponenten eingesetzt werden. In diesen Systemen sind kleine Kugelgrößen im Allgemeinen vorteilhaft.

### Beispiel 1

### a) Herstellung des Polymerisats

### a.1) Herstellung eines Saatpolymerisates

In einem 4 1 Glasreaktor werden 1960 ml entionisiertes Wasser vorgelegt. Hierin werden 630 g einer mikroverkapselten Mischung aus 1,0 Gew.-% Divinylbenzol, 0,6 Gew.-% Ethylstyrol (eingesetzt als handelsübliches Gemisch aus Divinylbenzol und Ethylstyrol mit 63 Gew.-% Divinylbenzol), 0,5 Gew.-% tert.-Butylperoxy-2-ethylhexanoat und 97,9 Gew.-% Styrol gegeben, wobei die Mikrokapsel aus einem mit Formaldehyd gehärteten Komplexkonzervat aus Gelatine und einem Acrylamid/Acrylsäure-Copolymerisat besteht. Die mittlere Teilchengröße beträgt 231 µm. Die Mischung wird mit einer Lösung aus 2,4 g Gelatine, 4 g Natriumhydrogenphosphatdodekahydrat und 100 mg Resorcin in 80 ml entionisiertem Wasser versetzt, langsam gerührt und unter Rühren 10 h bei 75°C polymerisiert. Anschließend wird durch Temperaturerhöhung auf 95°C auspolymerisiert. Der Ansatz wird über ein 32 µm-Sieb gewaschen und getrocknet. Man erhält 605 g eines kugelförmigen, mikroverkapselten Polymerisats mit glatter Oberfläche. Die Polymerisate erscheinen optisch transparent; die mittlere Teilchengröße beträgt 220 µm. Das Saatpolymerisat hat einen Volumen-Quellindex von 4,7 und lösliche Anteile von 0,45 %.

### a.2) Herstellung eines Copolymerisates

In einem 4 1 Glasreaktor werden 416,9 g Saatpolymerisat aus (a) und eine wässrige Lösung aus 1100 g entionisiertem Wasser, 3,6 g Borsäure und 1 g Natriumhydroxid eingefüllt und die Rührgeschwindigkeit auf 220 upm (Umdrehungen pro Minute) eingestellt. Innerhalb von 30 min wird ein Gemisch aus 713,4 g Styrol, 70 g Divinylbenzol (80,0 Gew.%ig) und 6,3 g Dibenzoxlperoxid (75 Gew.%ig, wasserfeucht) als feed zugesetzt. Das Gemisch wird 60 min bei Raumtemperatur gerührt, wobei der Gasraum mit Stickstoff gespült wird. Danach wird eine Lösung von 2,4 g Methylhydroxyethylcellulose in 120 g entionisiertem Wasser zugesetzt. Der Ansatz wird nun auf 63°C aufgeheizt und 11 Stunden bei dieser Temperatur belassen, anschlieβend wird 2 Stunden auf 95°C erwärmt. Der Ansatz wird nach dem Abkühlen gründlich über ein 40 µm-Sieb mit entionisiertem Wasser gewaschen und dann 18 Stunden bei 80°C im Trockenschrank getrocknet. Man erhält 1150 g eines kugelförmigen Copolymerisats mit einer Teilchengröße von 370 µm.

### b) Chlormethylierung des Copolymerisates

In einem 3 1 Sulfierbecher wird eine Mischung aus 1600 g Monochlordimethylether, 165 g Methylal und 5 g Eisen(III)chlorid vorgelegt und anschließend 300 g Copolymerisat aus a) zugegeben. Das Gemisch wird 30 min bei Raumtemperatur stehen gelassen und in 3 h auf Rückflusstemperatur (55 bis 59°C) erhitzt. Anschließend rührt man weitere 1,75 h unter Rückfluss nach. Während der Reaktonszeit werden ca. 275 g Salzsäure und leichtsiedende Organika abgetrieben. Anschließend wird die dunkelbraune Reaktionssuspension abfiltriert, das erhaltene Produkt mit einer Mischung aus Methylal und Methanol, anschließend mit Methanol, dann mit entionisiertem Wasser, intensiv gewaschen. Man erhält 680 g wasserfeuchtes, chlormethyliertes Perlpolymerisat.
Chlorgehalt: 18,8 %.

Dabei wurden aus dem Filtrat des Reakionsgemisches ca. 8 bis 10 g Oligomere pro 1000 g Polymerisat mit einem Überschuss an Methanol gefällt.

100 ml nutschfeuchtes Chlormethylat wiegen 65,9 g. Sie enthalten 12,45 g Chlor entsprechend 0,351 mol.

### c) Herstellen eines Adsorbers

153 g = 197 ml Chlormethylat werden in VE-Wasser eingerüttelt und die Suspension in eine Waschsäule überführt. Man lässt das überstehende Wasser ablaufen. Über einen Labordampferzeuger wird dann mit einer Geschwindigkeit von 600 ml Kondensat pro Stunde Dampf auf die Waschsäule gegeben. Insgesamt werden ca. 2,5-3 Bettvolumen Kondensat abgenommen. Das wasserfeuchte Chlormethylat wird in einen 4 Halskolben mit Thermometer, Tropftrichter und Wasserabscheider überführt, mit 460 ml Dichlorethan (DCE) versetzt, und die Reaktionssuspension 30 min bei Raumtemperatur gerührt. Danach wird bis zur vollständigen Wasserentfemung am Wasserabscheider unter Rückfluss erhitzt. Es werden ca. 22 ml Wasser ausgekreist. Nach beendeter Wasserauskreisung werden innerhalb von 2 h 44 g einer 40 Gew.-% FeCl₃-Lösung bei Rückflusstemperatur zudosiert. Das über die Lösung zudosierte Wasser wird am Wasserabscheider ausgekreist. Anschließend erhitzt man ca. 15 h unter Rückfluss (Badtemperatur 120°C). Es werden ca. 27 g HCl freigesetzt. Man kühlt auf Raumtemperatur und trennt ca. 325 ml DCE über ein Siebrohr ab. Das DCE-feuchte rohe Adsorberharz (355 ml) wird in eine Waschsäule überführt. Über einen Labordampferzeuger wird dann mit einer Geschwindigkeit von 600 ml Kondensat pro h Dampf auf die Waschsäule gegeben. Insgesamt werden ca. 3-3,5 Bettvolumen Kondensat abgenommen. Man isoliert ca. 1000 ml Kondensat, wobei 162 g = 130 ml DCE und 885 g = 890 ml wässrige Phase abgetrennt werden können. Nach dem Abkühlen auf Raumtemperatur wäscht man die Perlen zunächst mit 1175 ml VE-Wasser (ca. 5 Bettvolumen), dann mit 180 ml 2n NaOH (ca. 0,5 Bettvolumen) und anschließend mit 1175 ml VE-Wasser (ca. 5 Bettvolumen) und trennt über eine Nutsche vom Wasser ab.

VE-Wasser steht für vollentsalztes Wasser

## Patentansprüche

1. Verfahren zur Herstellung monodisperser, gelförmiger Adsorberharze, dadurch gekennzeichnet, dass man
a) Monomertröpfchen aus mindestens einer monovinylaromatischen Verbindung und mindestens einer polyvinylaromatischen Verbindung und/oder gegebenenfalls einem Initiator oder einer Initiatorkombination, zu einem monodispersen, vernetzten Perlpolymerisat umsetzt,
b) dieses monodisperse, vernetzte Perlpolymerisat mit Haloalkylierungsmitteln haloalkyliert und
c) das haloalkylierte Perlpolymerisat in Gegenwart von Friedel-Crafts-Katalysatoren nachvernetzt.

2. Verfahren gemäß Anspruch 1, dadurch gekennzeichnet, dass Schritt a) nach einer Saatzulaufmethode erfolgt.

3. Verfahren gemäß Ansprüche 1 und 2, dadurch gekennzeichnet, dass monovinylaromatische Verbindungen der Reihe Styrol, Vinyltoluol, Ethylstyrol, α-Methylstyrol, Chlorstyrol, Chlormethylstyrol, Acrylsäurealkylester oder Methacrylsäurealkylester eingesetzt werden.

4. Verfahren gemäß Ansprüche 1 und 2, dadurch gekennzeichnet, dass polyvinylaromatische Verbindungen der Reihe Divinylbenzol, Divinyltoluol, Trivinylbenzol, Divinylnaphthalin, Trivinylnaphthalin, 1,7-Octadien, 1,5-Hexadien, Ethylenglycoldimethacrylat, Trimethylolpropantrimethacrylat oder Allylmethacrylat eingesetzt werden.

5. Verfahren gemäß Anspruch 1, dadurch gekennzeichnet, dass die Monomertröpfchen mikroverkapselt werden.

6. Verfahren gemäß Anspruch 1, dadurch gekennzeichnet, dass das überschüssige Haloalkylierungsmittel vor dem Nachvernetzen abgetrennt wird.

7. Monodisperse, gelförmige Adsorberharze hergestellt durch
a) Umsetzen von Monomertröpfchen aus mindestens einer monovinylaromatischen Verbindung und mindestens einer polyvinylaromatischen Verbindung und/oder gegebenenfalls einem Initiator oder einer Initiatorkombination, zu einem monodispersen, vernetzten Perlpolymerisat,
b) Haloalkylieren dieses monodispersen, vernetzten Perlpolymerisats mit Haloalkylierungsmitteln und
c) Nachvernetzen des haloalkylierten Perlpolymerisats in Gegenwart von Friedel-Crafts-Katalysatoren.

8. Verwendung der monodispersen, gelförmigen Adsorberharze gemäß Anspruch 7 zur Entfernung von polaren oder unpolaren, organischen oder anorganischen Verbindungen oder Schwermetallen aus wässrigen oder organischen Lösungen oder Gasen.

9. Verwendung gemäß Anspruch 8, dadurch gekennzeichnet, dass wässrige oder organische Lösungen oder Gase der chemischen Industrien, Elektroindustrien, Lebensmittelindustrien, Abfallentsorgungs- oder Abfallverwertungsindustrien gereinigt werden.

10. Verwendung der monodispersen, gelförmigen Adsorberharze gemäß Anspruch 7 zur Aufbereitung von Trinkwasser oder Grundwässer.

11. Verwendung der monodispersen, gelförmigen Adsorberharze gemäß Anspruch 7 in chromatographischen Trennverfahren.

12. Verwendung gemäß Anspruch 8, dadurch gekennzeichnet, dass Aldehyde, Ketone, aromatische oder aliphatische Kohlenwasserstoffe oder aromatische oder aliphatische Chlorkohlenwasserstoffe aus Luft oder Gasen adsorbiert werden.
